Europäisches Patentamt

European Patent Office

Office européen des brevets

(19)

(11) Numéro de publication : **0 547 926 A1**

## (12) DEMANDE DE BREVET EUROPEEN

(21) Numéro de dépôt : **92403077.8**

(22) Date de dépôt : **16.11.92**

(51) Int. Cl.⁵ : **G05B 19/18,** B25J 19/02

(30) Priorité : **18.11.91 FR 9114181**

(43) Date de publication de la demande :
**23.06.93 Bulletin 93/25**

(84) Etats contractants désignés :
**DE ES GB IT**

(71) Demandeur : **AUTOMOBILES PEUGEOT**
**75, avenue de la Grande Armée**
**F-75116 Paris (FR)**

(71) Demandeur : **AUTOMOBILES CITROEN**
**62 Boulevard Victor-Hugo**
**F-92200 Neuilly-sur-Seine (FR)**

(72) Inventeur : **Oulamara, Aomer**
**11 Rue Victor Marquigny**
**F-94250 Gentilly (FR)**

(74) Mandataire : **Thinat, Michel et al**
**Cabinet Weinstein, 20 Avenue de Friedland**
**F-75008 Paris (FR)**

(54) **Procédé de calage d'un robot par rapport à une ligne de production et dispositif pour la mise en oeuvre d'un tel procédé.**

(57) La présente invention concerne un procédé de calage d'un robot par rapport à une ligne de production ainsi que le dispositif pour la mise en oeuvre d'un tel procédé.

Le dispositif est caractérisé en ce qu'il comprend au moins trois cibles optiques ponctuelles (1) comprenant chacune une diode électroluminescente (5) dont la lumière est focalisée par une lentille (7) sur l'une des extrémités d'une fibre optique (8) dont l'extrémité opposée servant de cible optique est localisée dans le référentiel de la ligne de production à une position de référence connue et une caméra vidéo à capteur CCD (10) embarquée sur le robot pour déterminer les coordonnées des cibles optiques (1) dans le référentiel du robot.

L'invention trouve application dans le domaine de l'automobile.

EP 0 547 926 A1

La présente invention concerne un procédé de calage d'un robot par rapport à une ligne de production ainsi qu'un dispositif pour la mise en oeuvre de ce procédé.

On sait que l'installation d'un robot sur une ligne de production nécessite une étape première de calage précis de ce robot avant sa mise en service et cette opération de calage consiste à identifier l'espace de travail du robot dans son repère propre. Cette condition est généralement satisfaite en réalisant une localisation tridimensionnelle précise de points caractéristiques de cet espace dans le référentiel du robot.

La présente invention propose ainsi un procédé de calage d'un robot par rapport à une ligne de production mettant en oeuvre des procédures rapides de calage automatique de celui-ci, sans contact, et simple à mettre en oeuvre de façon à contribuer à réduire les coûts d'installation et les réglages périodiques de maintenance.

A cet effet, le procédé de calage conforme à l'invention permettant de connaître précisément toute trajectoire d'un outil de travail du robot dans un espace de travail de la ligne-de production est caractérisé en ce qu'il consiste à déterminer par rapport à un référentiel lié à l'outil de robot les coordonnées d'au moins trois cibles optiques ponctuelles de l'espace de travail portées par la ligne de production à des positions de référence connues et à commander le robot de façon qu'il cale son outil en position de travail à partir des coordonnées déterminées des trois cibles optiques dans le référentiel du robot.

Selon une caractéristique de l'invention, le procédé consiste à détecter les trois cibles optiques précitées à l'aide d'une caméra vidéo à capteur CCD portée par le robot, centrer chaque cible optique dans l'axe de visée de la caméra pour obtenir les coordonnées cartésiennes (x,y) de la cible dans un plan de référence de la caméra, déterminer la distance (z') de la cible au plan de référence de la caméra au moyen d'une télémètrie par défocalisation telle que z soit déterminée par la relation suivante :

$$z' = (r.f)/r^d$$

où r = rayon du diaphragme de l'objectif de la caméra;

f = distance focale de l'objectif; et

$r_d$ = rayon de l'image défocalisée de la cible détectée sur le capteur CCD de la caméra, et à mémoriser les coordonnées de chaque cible.

Selon une autre caractéristique de l'invention, l'inclinaison de l'axe de visée de la caméra par rapport à l'axe optique de chaque cible est contrôlée et l'axe de visée de la caméra est ajusté de façon que les deux axes soient colinéaires en cas d'inclinaison relative des deux axes.

L'étape de contrôle d'inclinaison précitée consiste à contrôler la circularité de la répartition de l'énergie lumineuse de la cible optique sur le capteur CCD de la caméra en calculant le rapport de deux axes caractéristiques de cette répartition d'énergie lumineuse et à déterminer une absence de colinéarité des deux axes précités lorsque ce rapport est différent de un.

L'invention propose également un dispositif de calage d'un robot par rapport à une ligne de production pour la mise en oeuvre du procédé tel que défini ci-dessus et qui est caractérisé en ce qu'il comprend au moins trois cibles optiques ponctuelles comprenant chacune une diode électroluminescente, dont la lumière est focalisée par une lentille sur l'une des extrémités d'une fibre optique, dont l'autre extrémité servant de cible optique est localisée dans le référentiel de la ligne de production à une position de référence connue et un moyen optique de visée formé par une caméra vidéo à capteur CCD embarquée sur le robot pour déterminer les coordonnées des cibles optiques dans le référentiel du robot.

Avantageusement, chaque cible optique est autonome et comprend un corps fixé à un plateau de référence de la ligne de production et, logés dans le corps fixe, la fibre optique précitée de faible diamètre de coeur dont l'extrémité émettrice est mécaniquement fixée au corps fixe, la lentille précitée de focalisation, la diode électroluminescente précitée du type LED, une source d'alimentation, telle qu'une pile, de la diode électroluminescente et un interrupteur à bouton-poussoir fonctionnant en compression.

Le corps précité est fixé au plateau de référence par un axe de fixation coaxial à l'axe longitudinal de la fibre optique dont l'extrémité émettrice est fixée au corps par un connecteur de fixation.

De préférence, la caméra vidéo précitée comprend un filtre optique passe-bande d'entrée, un objectif à grande ouverture et un récepteur du type CCD matriciel relié à un circuit de traitement d'images apte notamment à déterminer la distance (z') entre la caméra et une cible précitée par mesure du rayon $r_d$ du disque lumineux de défocalisation de l'image de l'extrémité émettrice de la fibre optique sur le récepteur CCD et à partir de la relation :

$$z' = (r.f)/r^d$$

où r = rayon du diaphragme de l'objectif de la caméra;

f = distance focale de l'objectif;

$r_d$ = rayon de l'image défocalisée de la cible détectée sur le récepteur CCD de la caméra,

le circuit de traitement d'images étant de plus adapté pour fournir des signaux de commande de calage du robot en position de travail après détermination dans le référentiel du robot des trois coordonnées cartésiennes de chacune des trois cibles optiques.

Pour obtenir le rayon $r_d$ du disque lumineux précité, le circuit de traitement d'images binarise l'image du disque lumineux sur le récepteur CCD précité, extrait le bord du disque par un opérateur d'extraction de contours et calcule le rayon moyen $r_d$ du disque selon la relation :

$$r_d = 1/n \sum_{i=1}^{N} (x_i^2 + y_i^2)^{\frac{1}{2}}$$

où n est le nombre d'éléments d'image du cercle matérialisant le périmètre du disque.

Le circuit de traitement d'image est également adapté lors d'une inclinaison de l'axe de visée de la caméra par rapport à l'axe optique de la fibre optique à déterminer par calcul de moments d'image la direction de l'axe principal de la forme elliptique de la répartition de l'énergie lumineuse provenant de la fibre optique sur le capteur CCD, à calculer le rapport des axes caractéristiques de cette ellipse et à ajuster l'axe de visée de la caméra colinéairement à l'axe optique de la fibre optique suivant la valeur du rapport calculé autre que un.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels.

La figure 1 représente le dispositif de calage conforme à l'invention.

La figure 2 est une vue agrandie d'une cible optique utilisée dans le dispositif de calage.

La figure 3 représente schématiquement l'opération de centrage de l'axe de visée d'une caméra vidéo utilisée dans le dispositif de calage avec l'axe optique d'une cible.

La figure 4 représente trois cibles optiques d'identification de l'espace de travail du robot dans son repère propre.

Les figures 5 à 8 représentent des schémas optiques permettant de comprendre la technique de télémétrie par défocalisation utilisée dans le dispositif de l'invention.

Les figures 9 et 10 représentent schématiquement une méthode permettant de rendre colinéaire l'axe de visée de la caméra vidéo avec l'axe optique d'une cible optique.

La figure 11 représente l'angle solide de rayonnement d'une cible optique permettant sa détection par une caméra vidéo.

Le procédé de calage, selon l'invention, d'un robot par rapport à une ligne de production consiste généralement à identifier l'espace de travail du robot dans son propre repère sur un ensemble de points de référence de la ligne de production et les coordonnées tridimensionnelles de ces points repères permettent de connaître de manière précise toute trajectoire d'un outil de travail du robot dans cet espace en vue d'accomplir des opérations techniques de précision telles que par exemple la découpe par laser de pièces d'automobile ou l'usinage de telles pièces.

Le dispositif permettant de mettre en oeuvre ce procédé comprend au moins trois cibles optiques ponctuelles identiques 1 utilisées comme cibles de localisation dans le référentiel du robot d'une zone de travail de la ligne de production. Les cibles optiques 1 sont portées par la ligne de production sur un plan de référence P1 de celle-ci à des positions de référence connues. Chaque cible optique est constituée d'une source optique de rayonnement de très petites dimensions dont le centre est défini par ses coordonnées par rapport au plateau de référence P1. A cet effet, chaque cible 1 comprend un corps en forme de boîtier 2 fixé au plateau de référence P1 par un axe de fixation 3, telle qu'une vis, et, logés dans le corps 2, une source d'alimentation 4, telle qu'une pile ou une batterie, une diode électroluminescente 5 du type LED formant la source optique et alimentée par la source 4, un interrupteur 6 de préférence à bouton-poussoir fonctionnant en compression, une lentille 7 de focalisation de la lumière provenant de la diode 5 sur une extrémité d'une fibre optique multimode 8 de faible diamètre de coeur dont l'extrémité opposée servant de cible optique est localisée dans le référentiel de la ligne de production à une position de référence connue et un connecteur 9 de fixation de la fibre optique dans le corps formant boîtier 2 de telle façon que l'axe longitudinal ou axe optique de celle-ci soit coaxial à l'axe de la vis de fixation 3. La lumière émise par chaque diode électroluminescente 5 à travers la fibre optique 8 permet d'obtenir une source secondaire de très faible diamètre et de répartition énergétique approximativement uniforme.

Le dispositif comprend de plus un moyen optique de visée 10 formé par une caméra à capteur CCD embarquée sur le robot pour la localisation des cibles optiques 1. La caméra vidéo 10 comporte ainsi un filtre optique passe-bande d'entrée 11, un objectif de caméra à grande ouverture 12 et un récepteur CCD matriciel 13.

Ce dernier est relié électriquement à un circuit de traitement d'images 14, dont le rôle sera expliqué ultérieurement.

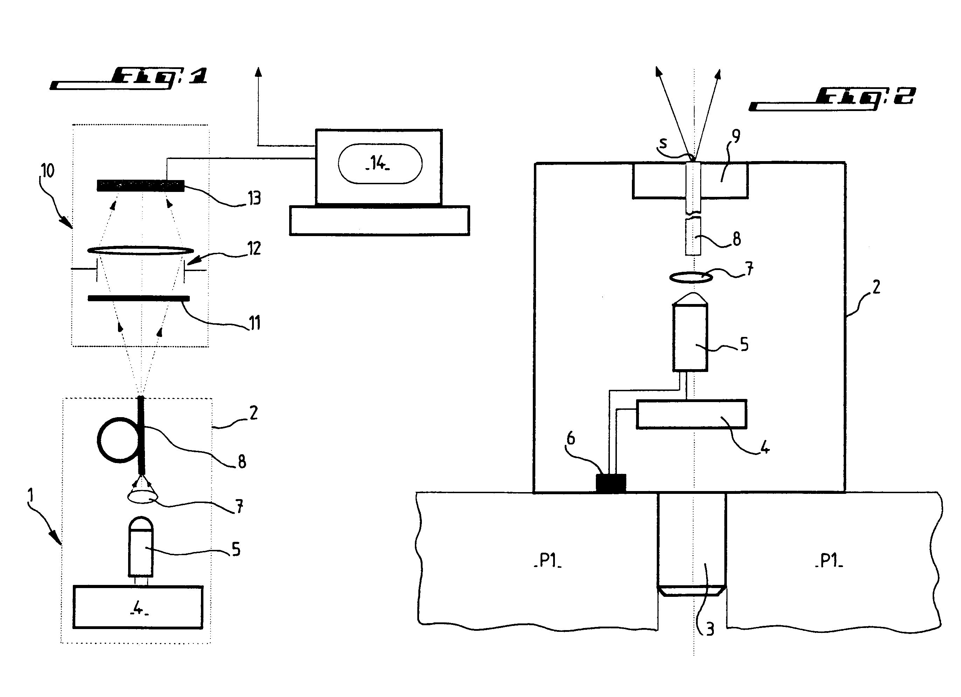

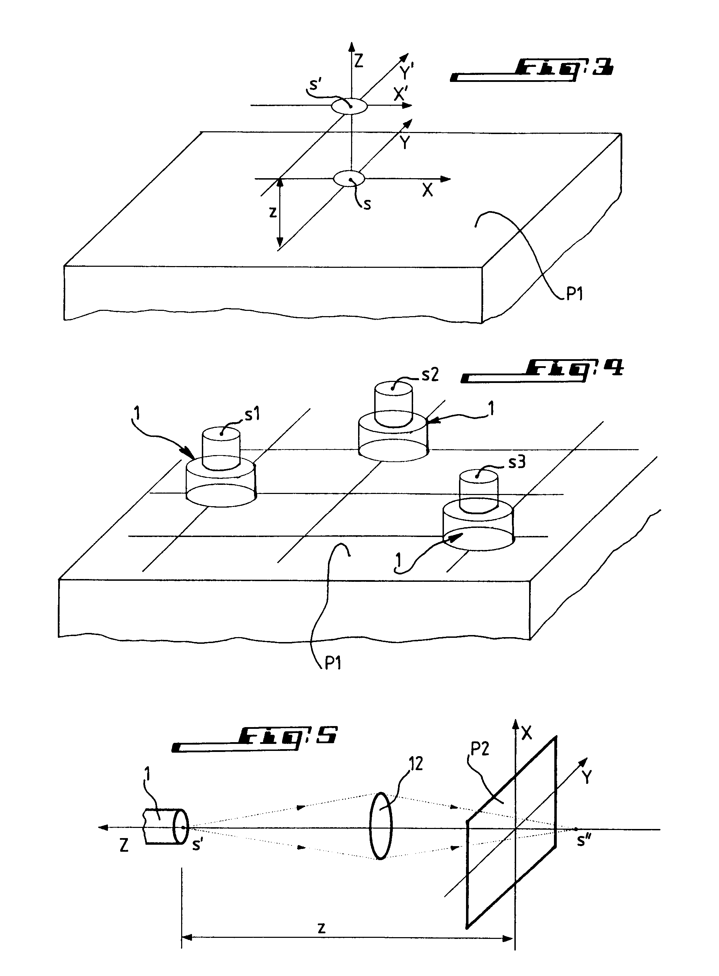

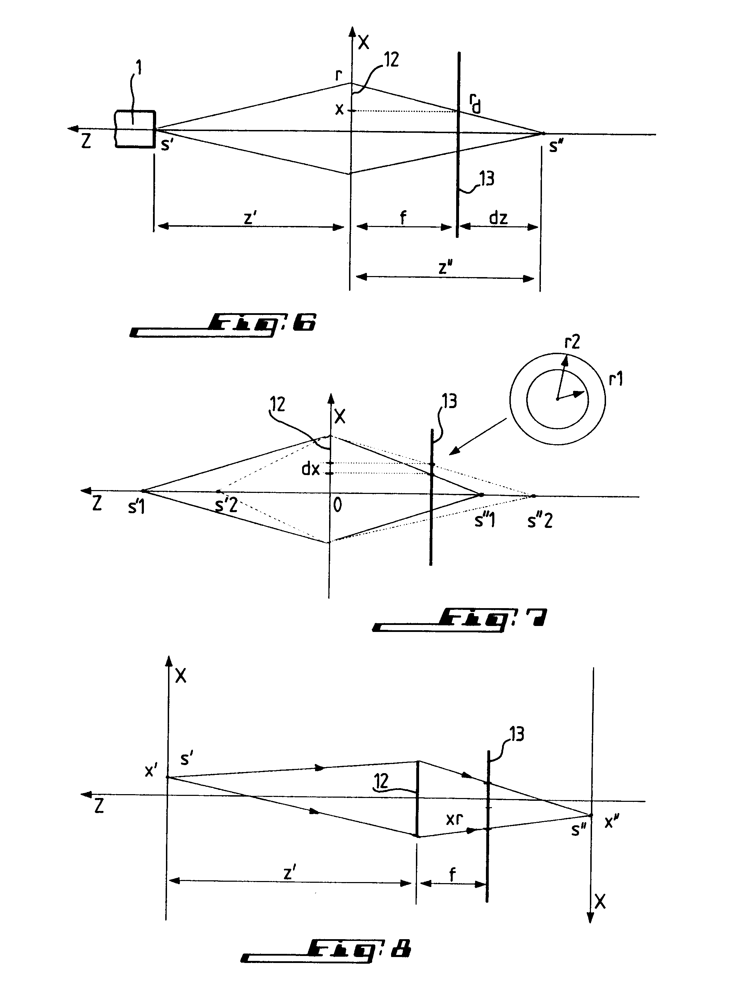

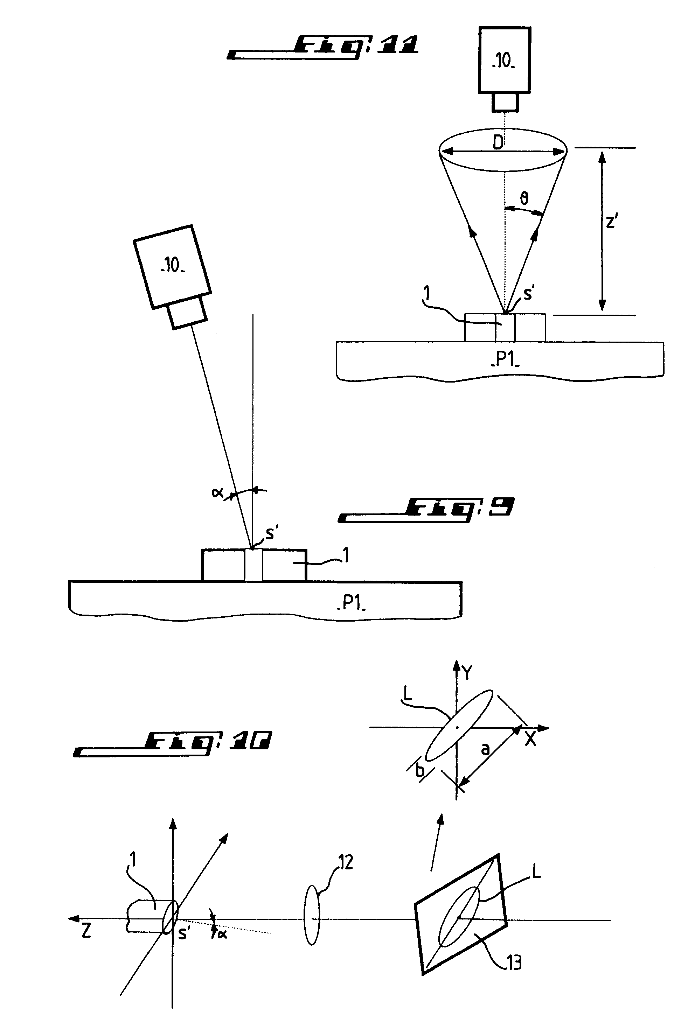

La caméra vidéo 10 détecte le microdisque lumineux constitué par le bout circulaire et poli de chaque fibre optique 8 et donne ainsi les coordonnées exactes du centre de la source de rayonnement s de la cible optique 1 dans un référentiel du robot. En effet, la position du centre de la section de la fibre optique 8 est définie au montage par centrage de l'axe longitudinal de la fibre optique 8 par rapport à l'axe de fixation mécanique 3, comme représenté en figure 3. Dans le repère (S,X,Y,Z) lié au plan de référence P1 avec ainsi le centre s de la section de la fibre optique 8 servant d'origine à ce repère, les coordonnées du centre s' du microdisque lumineux détecté par la caméra vidéo 10 sont $(O,O,z_O)$. Dès lors, la détection du centre ou point s' conduit aux coordonnées du point source s. Ainsi, les trois coordonnées de chaque cible optique 1 dans un plan de référence de la caméra vidéo 10 sont obtenues par centrage de l'axe optique de visée de la caméra 10 avec l'axe optique de la cible 1 et détermination de la distance z de la cible 1 par rapport à la caméra 10. Comme représenté en figure 4, un nombre minimal de trois cibles optiques 1 est indispensable pour une identification complète de l'espace fonctionnel du robot dans son repère propre. La possibilité de positionnement des cibles optiques 1 sur le plateau de référence P1 assure une flexibilité du procédé de l'invention. En effet, dans chaque type de ligne de production et selon le type de robot, la portée de celui-ci ne couvre pas toujours la surface d'un plateau standard (luge de référence). Ainsi, le choix dont dispose l'opérateur pour répartir les emplacements des cibles optiques 1 parmi un ensemble de positions de référence simplifie la mise en oeuvre du procédé quel que soit le cas de montage considéré.

Le procédé de détection optique par la caméra vidéo 10 associée à chaque cible optique 1 est basée sur les propriétés de l'imagerie par défocalisation. En effet, il s'agit de déterminer les coordonnées (x,y,z) de chaque cible 1 dans le repère de la caméra, qui est lui-même défini dans le repère outil du robot. Si les coordonnées x et y sont immédiates par centrage de l'axe de visée la caméra 10 avec l'axe optique de la cible 1 comme expliqué ci-dessus et tel que les coordonnées x et y soient nulles (x = y = 0), la coordonnée z n'est accessible qu'au moyen d'une méthode de télémétrie spécifique qui va être maintenant détaillée.

Pour accéder à la distance cible 1 - caméra 10 correspondant à la coordonnée z, on exploite la particularité de la source ponctuelle due à la fibre optique 8. Cependant, à cause de la très faible taille de la source ponctuelle et de phénomènes de diffraction, le fonctionnement en imagerie de l'objectif 12 de la caméra vidéo 10 ne fournit aucune information sur cette distance. Par contre, l'amplitude de défocalisation de l'image de la source ponctuelle est accessible comme cela va être expliqué en considérant les figures 5 et 6. Comme représenté, l'objectif 12 de focale f et de diamètre utile r, définissant ainsi l'ouverture numérique ON = f/r, forme l'image de la source s' sur le récepteur plan CCD 13 de la caméra 10 définissant le plan de référence P2 de la caméra 10 et donc du robot. Lorsque la source s' est à l'infini son image s" se forme sur le capteur CCD 13 à la distance focale f. L'étendue ou diamètre de s" est une fonction du diamètre de s' et de la fonction de transfert de l'objectif 12. Du fait de la faible dimension de s, l'image s' est approximativement ponctuelle.

Lorsque la source s' est à une distance finie z' de l'objectif 12, son image s" se trouve à la distance z" de l'objectif telle que z" = (f+dz) où dz correspond à la distance entre le récepteur CCD 13 et le point image s". En assimilant l'objectif 12 à une lentille mince placée à l'origine de l'axe des Z, la relation suivante peut être tirée à partir de la relation de conjugaison:

$$1/z' + 1/z'' = 1/f \quad (1)$$

qui donne l'expression de la quantité recherchée z'.

$$z' = (f.z'')/(z'' - f) \quad (2)$$

En utilisant le rayon r d'ouverture de l'objectif 12 et le rayon $r_d$ de l'image défocalisée (disque lumineux), de s' détectée sur le capteur CCD 13, on obtient la relation de proportionnalité des triangles semblables

$$(r/z'') = (r_d/dz) \quad (3)$$

comme dz = (z"-f), ceci donne

$$(r/z'') = (r_d/(z'' - f)) \quad (4)$$

d'où l'expression de z" :

$$z'' = (r.f)/(r - r_d) \quad (5)$$

En remplaçant l'expression de z" donnée par l'expression (5) dans l'expression (2), on obtient l'expression finale de la distance Z' :

$$Z' = (r.f)/r_d \quad (6)$$

avec

r = rayon du diaphragme de l'objectif 12;

f = distance focale de l'objectif 12;

$r_d$ = rayon de l'image défocalisée de la source s'.

La distance entre la caméra 10 et chaque cible optique 1 est ainsi directement obtenue par la mesure du rayon $r_d$ du disque de défocalisation de l'image de la source s', les paramètres r et f étant connus. La figure 7 montre l'exemple de deux distances z1 et z2 de la source produisant deux disques de défocalisation de rayons respectifs r1 et r2.

Ce résultat définit le principe de base d'une technique spécifique de télémétrie optique applicable sur des cibles actives ponctuelles. Associée à la détermination des coordonnées x et y du centre du disque de défocalisation, cette technique d'extraction de la composante z permet de localiser dans l'espace tridimensionnel toute cible émettrice ponctuelle. Le guidage du robot pour le calage est effectué par la détermination automatiquement des coordonnées x,y et z de la source ponctuelle.

Le circuit de traitement numérique d'images 14, du type à calculateur et carte mémoire, en aval de la caméra vidéo 10, permet l'extraction des coordonnées de chaque cible 1 par le calcul de la position et du rayon du disque lumineux formé sur le capteur CCD 13 de la caméra 10. Ces deux aspects du problème que constituent le centrage dans l'axe optique de chaque cible 1 de l'axe de visée de la caméra 10 et la télémétrie sont traités successivement ci-dessous.

Les coordonnées $(x_d, y_d)$ du centre du disque lumineux correspondent, à un facteur de grandissement près, aux coordonnées $(x, y)$ de la source s' dans le repère ou référentiel lié au plan du capteur CCD 13.

Les paramètres $x_d$ et $y_d$ sont déterminés par le calcul des coordonnées du centre d'inertie, ou moment statistique d'ordre zéro, du disque lumineux de l'image numérisée. La relation existant entre les coordonnées $(x_d, y_d)$ et $(x, y)$ est donnée par les lois de l'imagerie:

$$x = -xd(x'/f)$$
$$\text{et } y = -y_d(y'/f) \qquad (7)$$

Le calage de la cible optique 1 dans l'axe optique de visée de la caméra embarquée 10 est réalisé en effectuant un décalage du bras du robot portant la caméra 10 dans le plan $(x, y)$ pour satisfaire la condition :

$$x_d = y_d = 0 \quad (8)$$

Connaissant les paramètres optiques de l'objectif 12 de la caméra 10, la focale f et l'ouverture numérique ON, on détermine le rayon $r_d$ du disque lumineux formé sur le capteur CCD 13 afin d'aboutir à la distance de la cible optique 1 par rapport à la caméra 10. Le rayon du disque lumineux est obtenu par traitement successifs de l'image comprenant une binarisation de l'image du disque lumineux, une extraction du bord du disque lumineux par un opérateur d'extraction de contours, et un calcul du rayon moyen $r_d$ du cercle tel que

$$r_d = 1/n \sum_{i=1}^{N} (x_i^2 + y_i^2)^{\frac{1}{2}} \qquad (9)$$

où n est le nombre d'élément d'images $P_i(x_i, y_i)$ du cercle extrait matérialisant le périmètre du disque lumineux.

Lorsque cette quantité est calculée par le circuit de traitement 14, la distance de la cible optique 1 par rapport à la caméra 10 est déduite en utilisant l'expression (6) définie précédemment. Le circuit de traitement 14 peut ainsi guider le robot pour le caler par rapport à la ligne de production à partir des coordonnées déterminées des trois cibles optiques dans le référentiel du robot.

On notera que le centrage de la cible optique 1 dans l'axe optique de la caméra vidéo 10 n'assure pas systèmatiquement la colinéarité de celui-ci avec l'axe de propagation de la fibre optique qui est lui-même perpendiculaire au plan de référence (plan de luge). Une schématisation de cette inclinaison est rapportée aux figures 8 et 9. Le circuit de traitement d'images 14 est adapté pour effectuer un contrôle spécifique garantissant la colinéarité de ces deux axes. Ce contrôle est basé sur le critère de circularité du disque limineux L formé sur le capteur plan CCD 13 de la caméra 10. En effet, lorsqu'il existe un angle d'inclinaison $\alpha$ entre l'axe optique de la fibre optique 8 et l'axe optique de visée de la caméra 10, la répartition d'énergie lumineuse passant par la pupille d'entrée de l'optique de la caméra 10 n'est pas symétrique comme représenté en figure 10 et ceci a pour conséquence une forme elliptique de cette répartition sur le capteur CCD 13.

Le circuit de traitement d'images 14 est adapté pour déterminer la direction de l'axe principal de l'ellipse L par un calcul des moments d'image et effectuer ensuite un calcul du rapport (a/b) des axes caractéristiques de cette ellipse. Le contrôle ou test de circularité est alors effectué sur ce rapport a/b par le circuit de traitement d'images 14, c'est-à-dire lorsque ce dernier détermine un rapport a/b = 1, alors les deux axes optiques mentionnés ci-dessus sont colinéaires et si ce rapport est différent de 1, alors l'axe optique de visée de la caméra 10 est incliné par rapport à l'axe de propagation de la fibre optique 8. Dans ce dernier cas, le circuit de traitement 14 transmet un signal de commande au robot d'ajustement de l'axe de visée de la caméra 10 pour assurer la colinéarité de ce dernier avec l'axe optique de la cible 1 et par conséquent la perpendicularité de l'axe de visée de la caméra par rapport au plan de référence de calage.

Les étapes principales de la procédure automatique de calage du robot vont être maintenant considérées.

L'objectif de cette procédure de calage du robot consiste à limiter au maximum le taux d'intervention d'un opérateur. Ce dernier doit donc être libéré dès la phase de lancement pour que le robot effectue son autocalage. Aussi, la procédure de poursuite d'une cible optique 1 doit être précédée d'une phase de détermination de la position de départ du robot appelée également accrochage du robot.

La position de départ du robot pour la poursuite de la cible doit être communiquée à celui-ci. Cette position initiale est réalisée par l'opérateur en disposant la cible optique dans le champ vu par la caméra vidéo 10. Cette opération est effectuée par une commande manuelle des mouvements du bras du robot portant la caméra 10. Un moniteur de contrôle permettant de visualiser la cible ou un logiciel de contrôle de présence dans une boucle de scrutation continue de la scène peut être utilisée comme indicateur d'accrochage du robot.

Comme représenté en figure 11, le domaine de positionnement de la caméra 10 permettant de détecter la cible est déterminé par les paramètres suivants :
- la focale et l'ouverture de l'objectif de la caméra 10;
- la distance cible 1 - caméra 10;
- l'ouverture numérique de la fibre optique.

Ce dernier paramètre détermine la zone de recherche de la cible 1. En effet, cette ouverture numérique, qui est une caractéristique de la fibre optique 8, définit l'angle solide de rayonnement de la source. Par conséquent, la zone dans laquelle la cible peut être vue par la caméra est donnée par la section du disque d'éclairement de la cible défini par son diamètre D tel que :

$$D = 2.Z'.\tan g \quad (10)$$

où z' est la distance cible-caméra et le demi-angle au sommet de la fibre optique 8 définissant l'ouverture numérique $ON = \sin \theta$ .

Une fois effectué le contrôle positif de présence de la cible dans le champ de la caméra 10 et la position initiale du robot communiquée à la commande de celui-ci, une procédure de descente du bras du robot portant la caméra 10 vers la cible est déclenchée. Cette procédure de poursuite est arrêtée lorsque les conditions de localisation de la cible décrite précédemment sont satisfaites, c'est-à-dire que $x_d = y_d = O$ et $z' = z_O$, $z_O$ étant la distance de calibration de la distance de la caméra 10 par rapport à la cible 1 choisie par l'opérateur.

Les étapes principales de l'algorithme de poursuite de la cible par le robot sont définies ci-dessous.

début:
- décalage pour assurer le centrage de la caméra dans l'axe optique de la cible ($x_d = y_d = O$);
- calcul de la distance exacte z';
- descente, incrémentation $z' = (z'-dz)$;
- correction de position ($x_d = y_d = O$);
- actualisation de la position $z' = (z'-dz)$;
- test :
  z' = $z_O$ ?
        si non retour au début
        si oui fin de poursuite
- correction d'inclinaison de l'axe optique de visée de la caméra relativement à l'axe optique de la cible;
- transfert des coordonnées de calage du robot;
  fin :

Le procédé de calage d'un robot par rapport à une ligne de production ainsi que le dispositif pour sa mise en oeuvre ci-dessus décrits répondent ainsi au double objectif d'un calage rapide automatique sans contact et de simplicité de mise en oeuvre de la procédure de calage contribuant à la réduction des coûts d'installation et des réglages périodiques de maintenance.

**Revendications**

1. Procédé de calage d'un robot par rapport à une ligne de production afin de connaître précisément toute trajectoire d'un outil de travail du robot dans un espace de travail de la ligne de production, caractérisé en ce qu'il consiste à déterminer par rapport à un référentiel (P2) lié à l'outil du robot les coordonnées d'au moins trois cibles optiques ponctuelles (1) de l'espace de travail portées par la ligne de production à des positions de référence connues et à commander le robot de façon qu'il cale son outil en postion de travail à partir des coordonnées déterminées des trois cibles optiques (1) dans le référentiel du robot (P2).

2. Procédé selon la revendication 1, caractérisé en ce qu'il consiste à détecter les trois cibles optiques (1) précitées à l'aide d'une caméra vidéo à capteur CCD (10) portée par le robot, centrer chaque cible optique (1) dans l'axe de visée de la caméra (10) pour obtenir les coordonnées cartésiennes (x, y) de la cible (1) dans un plan de référence (P2) de la caméra (10), déterminer la distance (z') de la cible (1) au plan de référence (P2) de la caméra (10) au moyen d'une télémétrie par défocalisation aboutissant à la relation :

$$z' = (r.f)/r_d$$

où r = rayon du diaphragme de l'objectif de la caméra (10);

f = distance focale de l'objectif; et

$r_d$ = rayon de l'image défocalisée de la cible (1) détectée sur le capteur CCD (13) de la caméra (10), et à mémoriser les coordonnées de chaque cible (1).

3. Procédé selon la revendication 2, caractérisé en ce qu'il consiste à contrôler l'inclinaison de l'axe de visée de la caméra (10) par rapport à l'axe optique de chaque cible (1) et à ajuster l'axe de visée de la caméra (10) de façon que les deux axes soient colinéaires en cas d'inclinaison relative des deux axes.

4. Procédé selon la revendication 3, caractérisé en ce que le contrôle d'inclinaison précité consiste à contrôler la circularité de la répartition de l'énergie lumineuse de la cible optique (1) sur le capteur CCD (13) de la caméra (10) en calculant le rapport (a/b) de deux axes caractéristiques de la répartition d'énergie lumineuse et à déterminer une absence de colinéarité des deux axes optiques précités lorsque le rapport (a/b) est différent de un.

5. Procédé selon l'une des revendications précédentes, caractérisé en ce qu'il consiste à déterminer la position initiale de départ du robot en disposant une cible optique (1) dans le champ vu par la caméra (10) par une commande manuelle des mouvements du bras du robot portant la caméra (10) et détectant la cible (1) à l'aide par exemple d'un moniteur de contrôle visualisant la cible.

6. Dispositif de calage d'un robot par rapport à une ligne de production pour la mise en oeuvre du procédé tel que défini aux revendications 1 à 5, caractérisé en ce qu'il comprend au moins trois cibles optiques ponctuelles (1) comprenant chacune une diode électroluminescente (5) dont la lumière est focalisée par une lentille (7) sur l'une des extrémités d'une fibre optique (8) dont l'autre extrémité servant de cible optique (1) est localisée dans le référenciel (P1) de la ligne de production à une position de référence connue et un moyen optique de visée formé par une caméra vidéo (10) à capteur CCD (13) embarquée sur le robot pour déterminer les coordonnées des cibles optiques (1) dans le référentiel (P2) du robot.

7. Dispositif selon la revendication 6, caractérisé en ce que chaque cible optique (1) est autonome et comprend un corps (2) fixé à un plateau de référence (P1) de la ligne de production et, logés dans le corps fixe (2), la fibre optique (8) précitée de faible diamètre de coeur dont l'extrémité émettrice est mécaniquement fixée au corps fixe (2), la lentille de focalisation (7) précitée, la diode électroluminescente (5) précitée du type LED, une source d'alimentation (4), telle qu'une pile, de la diode électroluminescente (5) et un interrupteur à bouton-poussoir fonctionnant en compression (6).

8. Dispositif selon la revendication 7, caractérisé en ce que le corps (2) précité est fixé au plateau de référence (1) par un axe de fixation (3) coaxial à l'axe longitudinal de la fibre optique (8) dont l'extrémité émettrice est fixée au corps (2) par un connecteur de fixation (9).

9. Dispositif selon l'une des revendications 6 à 8, caractérisé en ce que la caméra vidéo (10) précitée comprend un filtre optique passe-bande d'entrée (11), un objectif à grande ouverture (12) et un récepteur du type CCD matriciel (13) relié à un circuit de traitement d'images (14) apte notamment à déterminer la distance (z') entre la caméra (10) et une cible (1) par mesure du rayon $r_d$ du disque lumineux (L) de défocalisation de l'image de l'extrémité émettrice de la fibre optique (8) sur le récepteur CCD (13) et à partir de la relation :

$$z' = (r.f)/r_d$$

où r = rayon du diaphragme de l'objectif de la caméra;

f = distance focale de l'objectif;

$r_d$ : rayon de l'image défocalisée de la cible (1) détectée sur le capteur CCD (13) de la caméra, Le circuit de traitement d'images (14) étant de plus adapté pour fournir des signaux de commande de calage du robot en position de travail après détermination dans le référentiel du robot des trois coordonnées cartésiennes de chacune des trois cibles optiques (1).

10. Dispositif selon la revendication 9, caractérisé en ce que pour obtenir le rayon $r_d$ du disque précité, le circuit de traitement d'images (14) binarise l'image du disque lumineux sur le capteur CCD (13) précité, extrait le bord du disque par un opérateur d'extraction de contours et calcule le rayon moyen $r_d$ du disque selon la relation :

$$r_d = 1/n \sum_{i=1}^{N} (x_i^2 + y_i^2)^{\frac{1}{2}}$$

où n est le nombre d'éléments d'image du cercle matérialisant le périmètre du disque.

11. Dispositif selon la revendication 9, caractérisé en ce que le circuit de traitement d'images (14) est également adapté, lors d'une inclinaison de l'axe de visée de la caméra (10) par rapport à l'axe optique de la fibre optique (8), à déterminer par calcul de moments d'image la direction de l'axe principal de la forme elliptique de la répartition de l'énergie lumineuse provenant de la fibre optique (8) sur le capteur CCD (13) à calculer le rapport (a/b) des axes caractéristiques de cette ellipse et à ajuster l'axe de visée de la caméra colinéairement à l'axe optique de la fibre optique (8) suivant la valeur du rapport calculé autre que un.

Fig. 2

Fig. 1

Fig.3

Fig.4

Fig.5

Fig. 6

Fig. 7

Fig. 8

_Fig: 11_

_Fig. 9_

_Fig. 10_

Office européen
des brevets

**RAPPORT DE RECHERCHE EUROPEENNE**

Numero de la demande

EP    92 40 3077
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | IBM TECHNICAL DISCLOSURE BULLETIN vol. 30, no. 12, Mai 1988, NEW YORK US pages 144 - 145 'Robot VisionCalibration Technique' * page 144 - page 145 * --- | 1,5-8 | G05B19/18 B25J19/02 |
| Y | IEEE TRANSACTIONS ON PATTERN ANALYSIS AND MACHINE INTELLIGENCE vol. 11, no. 9, Septembre 1989, NEW YORK US pages 916 - 928 REIMAR K. LENZ & ROGER Y. TSAI 'Calibrating a Cartesian Robot with Eye-on-Hand Configuration Independent of Eye-to-Hand Relationship' * page 916 - page 928 * --- | 1,5-8 | |
| X | RESEARCH DISCLOSURE no. 306, Octobre 1989, NEW YORK US page 30615 ACHINGER MARK A. ET AL. 'Robot Teaching and Control System' * le document en entier * --- | 1,6 | |
| X | TRANSACTIONS OF THE INSTITUTE OF MEASUREMENT AND CONTROL vol. 12, no. 2, Avril / Juin 1990, LONDON GB pages 85 - 90 B. O'CONNOR 'An Optical System for Determining the Positional Accuracy of a Robot' * page 85 - page 90 * --- | 1-11 | **DOMAINES TECHNIQUES RECHERCHES (Int. Cl.5 )** G05B B25J |
| A | EP-A-0 301 527 (BRIGHAM YOUNG UNIVERSITY) * page 5, ligne 34 - page 8, ligne 29; figures 1,2A-2C,3-5 * --- -/-- | 1,6 | |

Le présent rapport a été établi pour toutes les revendications

| Lieu de la recherche | Date d'achèvement de la recherche | Examinateur |
|---|---|---|
| LA HAYE | 25 FEVRIER 1993 | HAUSER L.E.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P0402)

EP 0 547 926 A1

**Office européen des brevets**

# RAPPORT DE RECHERCHE EUROPEENNE

Numero de la demande

EP     92 40 3077
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN vol. 10, no. 202 (P-477)(2258) 15 Juillet 1986 & JP-A-61 045 303 ( HITACHI LTD. ) 5 Mars 1986 * abrégé * | 1,6 | |
| A | US-A-4 967 370 (HOWARD K. STERN) * colonne 3, ligne 13 - colonne 10, ligne 57; figures 1-12 * | 1-11 | |
| | | | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 25 FEVRIER 1993 | HAUSER L.E.R. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)

14